# EUROPEAN PATENT SPECIFICATION

(11) **EP 4 464 127 B1**
(45) Date of publication and mention of the grant of the patent: **21.05.2025**
(21) Application number: 22835829.7
(22) Date of filing: 19.12.2022
(51) Int. Cl.: H05B 45/10

(54) **LUMINOUS PANEL WITH POWER SUPPLY MEANS FOR SUPPLYING POWER TO ATTACHED DEVICE**
LEUCHTTAFEL MIT STROMVERSORGUNGSMITTELN ZUR STROMVERSORGUNG EINER ANGESCHLOSSENEN VORRICHTUNG
PANNEAU LUMINEUX DOTÉ DE MOYEN D'ALIMENTATION ÉLECTRIQUE POUR ALIMENTER UN DISPOSITIF FIXÉ

(30) Priority: 10.01.2022 EP 22150634
(43) Date of publication of application: 20.11.2024
(73) Proprietor: Signify Holding B.V., 5656 AE Eindhoven (NL)
(72) Inventor: VAN DE SLUIS, Bartel, Marinus, 5656 AE Eindhoven (NL); KRIJN, Marcellinus, Petrus, Carolus, Michael, 5656 AE Eindhoven (NL); ROZENDAAL, Leendert, Teunis, 5656 AE Eindhoven (NL); VISSENBERG, Michel, Cornelis, Josephus, Marie, 5656 AE Eindhoven (NL)
(74) Representative: Verweij, Petronella Daniëlle
(86) International application number: PCT/EP2022/086558
(87) International publication number: WO 2023/131502

(56) References cited:
- US-A1- 2009 146 909
- US-A1- 2010 219 694
- US-A1- 2012 194 448
- US-A1- 2014 187 288

## Description

### FIELD OF THE INVENTION

The invention relates to a luminous panel system configured to illuminate an area or a user.

### BACKGROUND OF THE INVENTION

Frequently, table-top therapy lights are used while users perform reading or other (on-screen) activities. Ideally, however, the therapy light surface should surround the reading device in order to illuminate the user's face from all sides. Many future indoor surfaces (e.g. ceilings, walls, desk dividers) are expected to have integrated light sources such that they become luminous surfaces which can provide comfortable lighting to users while at the same time add a more spacious and natural feeling to indoor spaces.

However, since such devices take up quite some space and need to be positioned near the user, it is beneficial to combine such light-emitting units with functional elements such as monitors, for space-efficiency reasons. For example, WO 2017/220322 A1 discloses a luminous panel providing a low resolution display output for viewing by multiple viewers at a large distance and having an integrated smaller high resolution display. This smaller display is positioned within the outer limit of the light emitting surface of the luminous panel and thus fills a window in the light emitting surface. A further example, US 2014/187288 A1, discloses an electronic device, i.e. a tablet dock, having a display screen.

A drawback of this luminous panel is that the use of the integrated smaller high resolution display is not always convenient for the user, e.g. it may take some effort for the user to get desired content on the smaller high resolution display.

### SUMMARY OF THE INVENTION

It is a first object of the invention to provide a luminous panel system, which can be used in combination with a further electronic device in a way that is (more) convenient for the user.

In a first aspect of the invention, a luminous panel system configured to illuminate an area or a user comprises a light emitting surface, a controller configured to control said light emitting surface, attachment means for attaching a further electronic device to said light emitting surface, and power supply means for supplying power to said further electronic device when said further electronic device is attached to said light emitting surface via said attachment means. Said power supply means is surrounded by a plurality of parts of said light emitting surface at opposite sides of said power supply means.

The luminous panel system may be, or may be comprised in, a luminous desk divider or monitor back panel, a ceiling panel, a table-top wake-up light, or a portable therapy light, for example. By allowing the user to flexibly attach a further electronic device, e.g. the user's own mobile phone or tablet, to the light emitting surface, it does not take the user much effort to use the functionality of the further electronic device, e.g. to get desired content on a high resolution display of the further electronic device. If many indoor surfaces become luminous, many users may be able to benefit from attaching digital (display) devices to the light emitting surfaces, for instance, attaching a monitor to a luminous desk divider, attaching a tablet to a luminous wall (or wall panel), or attaching a TV to an "Ambilight panel".

By allowing the further electronic device to be attached to a (more) central part of the light emitting surface rather than at an edge of the light emitting surface/luminous panel, a high resolution display of the further electronic device may be viewed more easily and/or a sensor of the further electronic device may sense better. For example, said power supply means may be located on a symmetry axis of said light emitting surface. The attachment means may also be located on or near the symmetry axis of the light emitting surface.

Furthermore, the attachment means allows the user to attach the further electronic device conveniently and the power supply means provides power to the further electronic device without the user needing any tools or wiring. This is beneficial for mobile phones, amongst others, because people want to continue to use their phones when charging. Preferably, said power supply means are hidden when they are not used (and may also be hidden when used). Preferably, said power supply means and said attachment means are located behind said light emitting surface. For example, the light emitting surface may be configured such that the power supply means are unobtrusive, hidden from sight, or (almost) invisible such that the light emitting surface functions normally when no further electronic device is attached (e.g. generating a uniform light output).

The luminous panel system may comprise a single device or multiple devices. As an example of the latter, the controller may be part of a different device than the light emitting surface, attachment means, and power supply means and communicate with the other device. The system may comprises multiple processors. Said controller may be configured to control said light emitting surface based on one or more properties of said further electronic device when said further electronic device is attached to said light emitting surface. If the luminous panel system is aware of the properties of the attached further electronic device, it may be able to adjust its light output accordingly. For example, the luminous panel system may generate light output on light emitting elements surrounding the further electronic device based on the current app or display content.

Said one or more properties of said further electronic device may comprise a type of said further electronic device, an identifier of an app running on said further electronic device, content rendered on said further electronic device, a state of said further electronic device, a color of said further electronic device, a position of said further electronic device, a shape of said further electronic device, an orientation of said further electronic device, and/or dimensions of said further electronic device, for example.

For instance, the light output of the light emitting surface of the luminous panel system may depend on the active app (application) on the attached device, e.g. render "Ambilight" light output for a movie, concentration light when reading an article, and "selfie-light" when the camera is active (e.g. during a video chat). Alternatively or additionally, a light color (pattern) may be rendered based on colors of the attached further electronic device or colors as currently rendered on a display of the attached further electronic device.

Said one or more properties of said further electronic device may comprise said position and/or said dimensions and/or said orientation of said further electronic device and said controller may be configured to determine, based on said position and/or said dimensions and/or said orientation of said further electronic device, a plurality of pixels covered by said further electronic device when said further electronic device is attached to said light emitting surface, and reduce said plurality of pixels' light output level while said further electronic device is attached to said light emitting surface.

This may save energy and/or prevent unwanted prominent lighting and/or prevent heat generation at the backside of the attached further electronic device. Furthermore, if there is a light sensor at the back of the further electronic device, this may prevent that this light sensor gets the (wrong) impression of a huge (ambient) light level, which might cause the screen of the further electronic device to be dimmed.

Said one or more properties of said further electronic device may comprise said position and/or said dimensions and/or said orientation of said further electronic device and said controller may be configured to determine, based on said position and/or said dimensions and/or said orientation of said further electronic device, a plurality of pixels surrounding said further electronic device when said further electronic device is attached to said light emitting surface, and control said surrounding pixels. This may be used to emphasize contours of said further electronic device on said light emitting surface or to render "Ambilight" light output for a movie, concentration light when reading an article, or "selfie-light" when the camera is active (e.g. during a video chat), for example. The determined surrounding pixels, which are preferably in spatial alignment with the edges of the further electronic device, may be only those pixels near the further electronic device or may be all pixels surrounding the further electronic device

Said controller may be configured to receive said one or more properties from sensing means integrated into said luminous panel system, from external sensing means, from said further electronic device and/or from a user device, for example. A light sensor may be integrated into or next to each light element, for example. Alternatively, sensing means may be integrated into the attachment means of the luminous panel system. The user device may be a mobile phone of the user, for example.

Said light emitting surface is preferably as large as a surface of said power supply means, said surface of said power supply means facing said light emitting surface, e.g. twice as large as said surface of said power supply means or even larger. Said light emitting surface may comprise a two-dimensional array of light emitting elements. This array may comprise LEDs placed in rows and columns or LEDs placed on a hexagonal grid or a random grid, for example.

Said power supply means may comprise one or more wireless power cells. Said attachment means may comprise one or more magnetic or metal parts, for example. The future of charging and power connectors is wireless power, which is already supported in many new smartphones. When Apple introduced the iPhone 12, Apple also launched Apple MagSafe, which features magnetic wireless charging. The MagSafe enables a device-attachable wireless charger which magnetically aligns optimally with the power transfer coils of the mobile phone. MagSafe addresses the challenge how to properly position the device on the charging pad to find the optimal coil alignment for the "charging sweet spot". The same technology may be used to supply power from the luminous panel system to the further electronic device with the help of the power supply means and the attachment means.

Said power supply means may comprise a power track and/or a power connector. Said power track and/or said power connector may be covered (i.e. and thereby hidden) by a light diffusing layer. A thin light-emitting layer (e.g. a side-lit light guide) covering the power supply means may be placed just behind the diffusing layer, for example.

### BRIEF DESCRIPTION OF THE DRAWINGS

These and other aspects of the invention are apparent from and will be further elucidated, by way of example, with reference to the drawings, in which:
Fig. 1 is a block diagram of a first embodiment of the luminous panel system;
Fig. 2 is a block diagram of a second embodiment of the luminous panel system;
Fig. 3 is a block diagram of a first embodiment of the light emitting surface of Fig. 1;
Fig. 4 is a block diagram of a third embodiment of the luminous panel system;
Fig. 5 is a block diagram of a fourth embodiment of the luminous panel system;
Fig. 6 is a block diagram of an embodiment of the light emitting surface of Fig. 5;
Fig. 7 is a cross section view of a column of light emitting elements of the light emitting surface of Fig. 6;
Fig. 8 is a block diagram of a second embodiment of the light emitting surface of Fig. 1;
Fig. 9 shows the further electronic device of Fig. 1 being attached to light emitting surface of Fig. 1;
Fig. 10 shows pixels covered by the further electronic device of Fig. 9 being switched off; and
Fig. 11 shows pixels surrounding the further electronic device of Fig. 9 being controlled to emphasize the contours of the further electronic device.

Corresponding elements in the drawings are denoted by the same reference numeral.

### DETAILED DESCRIPTION OF THE EMBODIMENTS

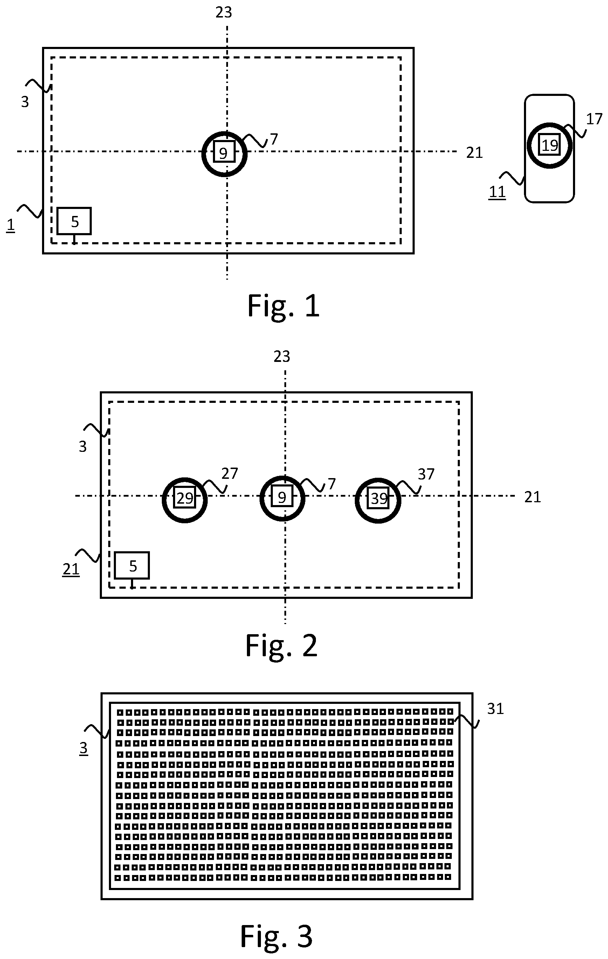

Fig. 1 shows a first embodiment of the luminous panel system configured to illuminate an area or a user: a luminous panel 1. The luminous panel 1 comprises a light emitting surface 3, a controller 5 configured to control the light emitting surface 3, attachment means 7 for attaching a further electronic device 11 to the light emitting surface 3, and power supply means 9 for supplying power to the further electronic device 11 when the further electronic device 11 is attached to the light emitting surface 3 via the attachment means 7. The power supply means 9 is surrounded by a plurality of parts of the light emitting surface 3 at opposite sides of the power supply means 9.

In the embodiment of Fig. 1, the power supply means 9 comprise one or more wireless power cells and the attachment means 7 comprise one or more magnetic or metal parts. Further electronic device 11 also comprises attachment means. Attachments means 17 also comprises one or more magnetic or metal parts. At least one of attachment means 7 and attachment means 17 comprises one or more magnetic parts. Further electronic device 11 also comprises power reception means 19.

Further electronic device 11 may be a mobile phone or a tablet, for example. Upon attachment, the light emitting surface 3 may be controlled based on attached device inputs (e.g. rendering app or content-based light, Ambilight, sensor-based light control, alarm clock app, selfie light). Similarly, upon attachment, specific functions or apps may be started on the attached device (e.g. activate alarm clock function upon attaching phone to bedside wake-up light so the phone's alarm will wake the user in the morning, and the timing of the wake-up light is matched to the alarm time from the phone).

In the embodiment of Fig. 1, the power supply means 9 is located on a symmetry axis of the light emitting surface 3. Specifically, the power supply means 9 is located on two symmetry axes of the light emitting surface 3: axis 21 and axis 23. Next to power, the luminous panel might also provide a good network or data connection. For instance, the panel may have a recessed connector, e.g. USB(-C) for enabling the further electronic device to dock or HDMI for video, or the panel may have a built-in Wi-Fi repeater to make sure attached devices are provided with a good Wi-Fi signal (not shown in Fig. 1). The panel may be able to locate the connector of the further electronic device automatically when the further electronic device has been attached magnetically, e.g. based on the type and position of the further electronic device. The panel may control one or more light elements to indicate the position of the connector of the further electronic device.

The luminous panel 1 may be a luminous desk divider or monitor back panel, a ceiling panel, a table-top wake-up light, or a portable therapy light, for example. For instance, a luminous ceiling panel may enable a user to attach further electronic devices such as sensors, downlights or (rotatable) spotlight devices to the ceiling panel. In the case of a wake-up light, which helps people compensate for a lack of bright daylight when waking up, working or reading during winter time, an attached phone could automatically go into silent or do-not-disturb mode and/or activate the alarm clock app or function. In a similar way, a user could attach a tablet or electronic reader device to a portable or table-top therapy light in order to get optimal exposure to (therapy) light while browsing or reading.

In the embodiment of Fig. 1, only one further electronic device can be attached to the light emitting surface 3 at a time. In the embodiment of Fig 2, three further electronic devices can be attached to the light emitting surface 3 simultaneously. A second further electronic device can be attached to attachment means 27 and receive power from power supply means 29. A third further electronic device can be attached to attachment means 37 and receive power from power supply means 39. Power supply means 29 and 39 are located on a single symmetry axis: axis 21.

Fig. 3 shows a first embodiment of the light emitting surface 3 of Fig. 1. In the embodiment of Fig. 3, the light emitting surface 3 comprises a two-dimensional array of light emitting elements, including a light emitting element 31.

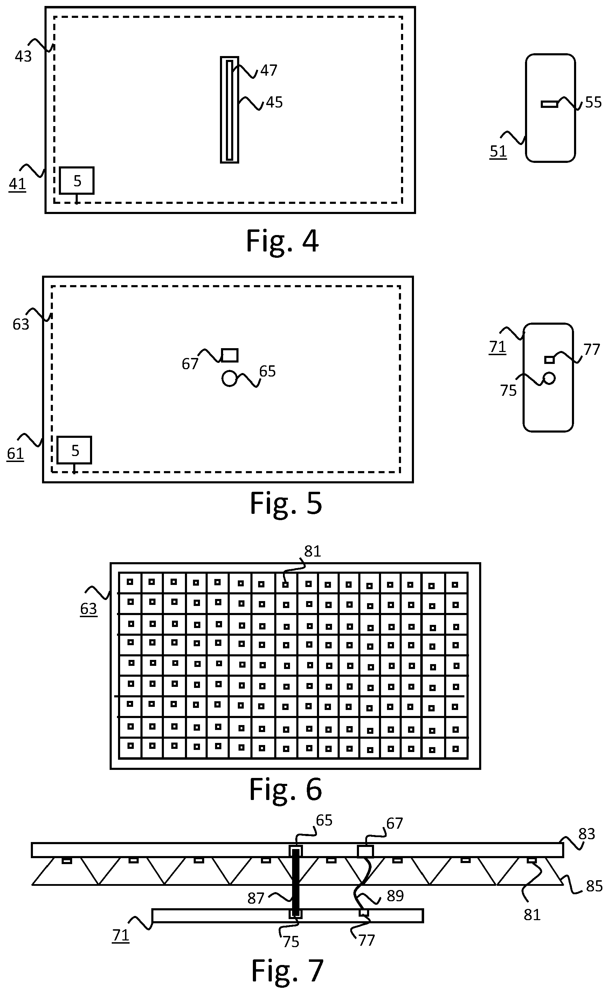

Fig. 4 shows a second embodiment of the luminous panel system configured to illuminate an area or a user: a luminous panel 41. The luminous panel 41 comprises a light emitting surface 43. In the embodiment of Fig. 4, attachment means 7 of Fig. 1 is replaced with attachment means 45 and power supply means 9 of Fig. 1 is replaced with power supply means 47. Power supply means 47 comprises a power track. The power track is located in the center, thereby enabling a further electronic device 51 to be easily connected. The power track may be configured such that it can light up and blend in with the light emitting surface surface, or it may be hidden behind a (e.g. Velcro) seam in a flexible (e.g. textile) diffusing layer, for example.

Further electronic device 51 comprises attachment means 55. Before the further electronic device is attached to the light emitting surface 43, it is first rotated 90 degrees. The attachment means 55 is then inserted into the power track and rotated 90 degrees in the other direction, which causes the attachment means 55 to be held in place by the attachment means 45 of the luminous panel 41. The attachment means 55 also functions as power reception means.

Fig. 5 shows a second embodiment of the luminous panel configured to illuminate an area or a user: a luminous panel 61. The luminous panel 61 comprises a light emitting surface 63. In the embodiment of Fig. 5, attachment means 7 of Fig. 1 is replaced with attachment means 65 and power supply means 9 of Fig. 1 is replaced with power supply means 67. Power supply means 67 comprises a power connector. A further electronic device 71 can be attached to the light emitting surface 63.

Further electronic device 71 comprises attachment means 75 and power reception means 77. Power reception means 77 comprises a power connector. Power reception means 77 and power supply means 67 may be connected with the help of a cable. In order to attach further electronic device 71 to the light emitting surface 63, attachment means 75 of further electronic device 71 and attachment means 65 of the luminous panel 61 are aligned.

Fig. 6 shows an embodiment of the light emitting surface of Fig. 5. In the embodiment of Fig. 6, the power track of Fig. 5 is covered by a light diffusing layer. The light emitting surface 63 comprises a grid of flexible, rectangular, diffusing cells. This grid of cells enables a user to move cabling/connectors through the seams and hide those between the cells. Each cell comprises a light emitting element, e.g. light emitting element 81.

Fig. 7 is a cross section view of a column of light emitting elements of the light emitting surface 61 of Fig. 6. The light emitting elements of Fig. 6 are mounted on a strong mechanical support panel 83 with integrated power connectors (one or more power tracks in an alternative embodiment), including power connector 67. Each light emitting element is covered by a rectangular, flexible diffusing cap. For example, light emitting element 81 is covered by diffusing cap 85. The flexible caps tightly fit together, resulting in a luminous panel front with a grid of seams.

The support panel 83 is also provided with attachment means 65, e.g. a mechanical mount. The attachment means 65 may comprise screw thread, for example. In the example of Fig. 7, the attachment means 65 of the luminous panel 61 and the attachment means 75 of further electronic device 71 are connected via a headless screw 87 and power supply means 67 of the luminous panel 61 and power reception means 77 of the further electronic device 71 are connected via a cable 89.

The user can push the caps apart in order to insert cable 89 and the headless screw 87 into, respectively, power supply means 67 and attachment means 65 of the support panel 83. It is also possible to hide cabling at the back of the flexible caps, near the support panel 83. While Fig. 7 shows the use of rectangular caps, the caps may alternatively have different characteristics such as hexagonal, sunflower seed arrangement, company logo, or some decorative pattern.

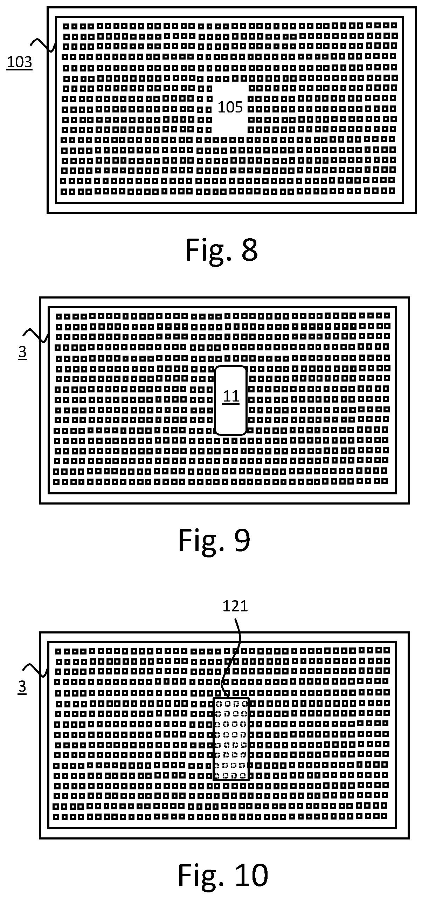

Fig. 8 shows a second embodiment of the light emitting surface of Fig. 1. Light emitting surface 3 of Figs. 1 and 3 has been replaced with a light emitting surface 103 in Fig. 8. While in the embodiment of Fig. 3, the array of light emitting elements is contiguous, in the embodiment of Fig. 8, there is a space 105 without light elements at the position where a further electronic device can be attached. The size of the space 105 may correspond to the minimum size of the further electronic device, for example.

As described above, the controller 5 is configured to control the light emitting surface. For example, the light emitting surface may provide comfortable and biological light effects while the user performs reading activities. The luminous panel may be a luminous desk divider, for example. In simple implementations, the luminous panel does not have an input for receiving data signals from another device, e.g. via a cable or wirelessly. In more advanced implementations, the luminous panel does have an input for receiving data signals from another device and is able to adjust the light emitted by the light emitting surface based on these data signals.

For example, the controller 5 may be configured to control the (light output of the) light emitting surface based on one or more properties of the further electronic device when the further electronic device is attached to the light emitting surface. Optionally, the attached further electronic device might be able to transfer control over to the luminous panel so the luminous panel can decide on the best settings for the combination of luminous panel and attached device. For example, in case the attached device is an Ambilight TV, the luminous panel could take over the control of the Ambilight part and may get de-activated on the attached TV itself.

The one or more properties of the further electronic device may comprise a type of the further electronic device, an identifier of an app running on the further electronic device, content rendered on the further electronic device, a state of the further electronic device, a color of the further electronic device, a position of the further electronic device, a shape of the further electronic device, an orientation of the further electronic device, and/or dimensions of the further electronic device, for example.

The controller 5 may be configured to receive the one or more properties of the further electronic device in one of the following ways or a combination of those:
1. from panel-integrated sensors: e.g. an integrated array of light or proximity sensors may be used to detect which light cells/elements are covered. The panel might also comprise panel-integrated hooks or holes with load-triggered sensors or switches, e.g. to detect simply whether a panel hook is used or not. The panel could also comprise means to detect magnetically attached objects (e.g. magnetic wireless power).
2. from external sensing means: e.g. a remote camera may be used to detect covered light cells/elements and/or properties of an attached further electronic device, e.g. as part of a light control app.
3. from the attached further electronic device: e.g. an attached display device might be able to share its physical dimensions, active apps and screen content via a (wireless or wired) connection to the luminous panel. A wireless connection may use Bluetooth, for example. A wired connection may use HDMI or USB, for example. Another option is that the attached further electronic device has some mechanical or electrical means of identifying itself to the luminous panel (or vice versa), for instance:
   - mechanical: pins sticking into holes (enables identification based on occupied pins or holes)
   - electrical: e.g. via NFC or proximity of charging coils
   - RF-based: RF nodes with signal strength detection; combination e.g. magnet with reed switches
4. from user configuration input: a user may be able to provide input to the luminous panel itself (e.g. using touch, panel buttons or voice input), but may also be able to use a connected configuration app via a user device. For instance, the user may be able to use an app to easily de-activate segments of a luminous desk divider to which a monitor could be attached. In that case, the configuration may be simplified, because it may be assumed that the monitor has a rectangular shape and will be positioned in the center of the panel. As a result, only fine-tune input may be needed in the user configuration, for instance to specify the exact monitor height position and size. After completing the configuration, the panel may activate a variety of light settings or content, however, the de-activated pixels/light elements will not render any output. The surrounding light output may be adjusted to properties of the de-activated light elements.

The controller of the luminous panel may be able to control the (light output of the) light emitting surface in various ways, for example:
1. De-activate pixels/light elements covered by the attached further electronic device(s): in order to save energy and prevent heat generation, the pixels which are (fully) covered by the further electronic device may be de-activated. This also prevents light from the luminous panel shining at the attached further electronic device at close range, which may be unwanted (e.g. visible from the side). De-activation may also be based on a (detected) distance between the luminous panel and the attached further electronic device, in case both are in close contact, there can be a hard boundary between active and deactivated light elements, whereas at some larger distance a brightness gradient (fade) may be applied creating a fuzzy boundary.
2. Control object-surrounding light nodes based on object properties: the light output around the objects may be adjusted based on the position, shape, colors of the attached further electronic device(s).
3. Control display-surrounding light nodes: surrounding pixels/light elements may be controlled based on the device properties. In a simple embodiment, the light output is based on the device shape and position, for instance, nature-like effects may be rendered on a luminous desk divider based on the display position, e.g. biophilic effects with a virtual horizon may be aligned with the computer monitor. In a more advanced embodiment, the luminous content is adjusted to the device state, the active app or properties of the display content (e.g. brightness level, colors near display border, etc.). For example, the display-surrounding light nodes may be used to render "Ambilight" light output for a movie.

Figs. 9 to 11 illustrates two of the uses described above. Fig. 9 shows the further electronic device 11 of Fig. 1 being attached to light emitting surface 3 of Fig. 1. To enable the first use in which the one or more properties of the further electronic device comprise the position and/or the dimensions and/or the orientation of the further electronic device, the controller 5 is configured to determine, based on the position and/or the dimensions and/or the orientation of the further electronic device, a plurality of pixels covered by the further electronic device when the further electronic device is attached to the light emitting surface and reduce the plurality of pixels' light output level while the further electronic device is attached to the light emitting surface.

Fig. 10 shows pixels covered by the further electronic device 11 of Fig. 9 being switched off, i.e. all pixels in area 121 have been switched off. This reduces energy consumption and/or prevents heat generation and the user is not able to see these pixels anyway.

To enable the second use in which the one or more properties of the further electronic device also comprise the position and/or the dimensions and/or the orientation of the further electronic device, the controller 5 is configured to determine, based on the position and/or the dimensions and/or the orientation of the further electronic device, a plurality of pixels surrounding the further electronic device when the further electronic device is attached to the light emitting surface, and control the surrounding pixels to emphasize contours of the further electronic device on the light emitting surface.

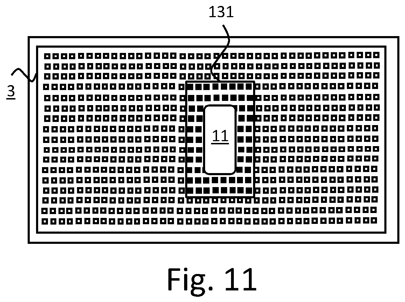

Fig. 11 shows pixels surrounding the further electronic device 11 of Fig. 9, i.e. the pixels in area 131, being controlled to emphasize the contours of the further electronic device 11.

In the embodiments described above and shown in the figures, the light emitting surface is at least twice as large as the surface of the power supply means. In an alternative embodiment, the light emitting surface is smaller relative to the surface of the power supply means. Preferably, the light emitting surface is at least as large as the surface of the power supply means. The surface of the power supply means faces the light emitting surface.

In the embodiments describe above and shown in the figures, the power supply means and the attachment means are located behind the light emitting surface. To help the user find the attachment means, light emitting elements near the attachment means may automatically light up, e.g. when a wirelessly chargeable further electronic device in particular or an object in general is detected nearby. In an alternative embodiment, the power supply means and the attachment means are not located behind the light emitting surface.

In the embodiment of the luminous panel system shown in the figures, the luminous panel comprises one controller 5. In an alternative embodiment, the luminous panel system comprises multiple controllers. The controller 5 of the luminous panel may be a general-purpose processor, e.g. from ARM or Qualcomm or an application-specific controller. The luminous panel may comprise other components typical for a luminous panel such as a housing and power reception means and/or a battery. The power reception means may be connected to the power grid, for example. In case of a portable luminous panel, it may have an integrated battery and the luminous panel may then double as a power bank and power or charge the attached device from this battery.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A luminous panel system (1,21,41,61) configured to illuminate an area or a user, said luminous panel system (1,21,41,61) comprising:
- a light emitting surface (3,43,63,103),
- a controller (5) configured to control said light emitting surface (3,43,63,103),
- attachment means (7,27,37,45,65) for attaching a further electronic device (11,51,71) to said light emitting surface (3,43,63,103), and
- power supply means (9,29,39,47,67) for supplying power to said further electronic device (11,51,71) when said further electronic device (11,51,71) is attached to said light emitting surface (3,43,63,103) via said attachment means (7,27,37,45,65);
**characterized in that**
said power supply means (9,29,39,47,67) is surrounded by a plurality of parts of said light emitting surface (3,43,63,103) at opposite sides of said power supply means (9,29,39,47,67),
wherein said controller (5) is configured to control said light emitting surface (3,43,63,103) based on one or more properties of said further electronic device (11,51,71) when said further electronic device (11,51,71) is attached to said light emitting surface (3,43,63,103), wherein said one or more properties of said further electronic device (11,51,71) comprise a position and/or a dimensions and/or an orientation of said further electronic device (11,51,71),
wherein said controller (5) is configured to:
- determine, based on said position and/or said dimensions and/or said orientation of said further electronic device (11,51,71), a plurality of pixels surrounding said further electronic device (11,51,71) when said further electronic device (11,51,71) is attached to said light emitting surface (3,43,63,103), and
- control said surrounding pixels.

2. A luminous panel system (1,21,41,61) as claimed in claim 1, wherein said one or more properties further comprise a type of said further electronic device (11,51,71), an identifier of an app running on said further electronic device (11,51,71), content rendered on said further electronic device (11,51,71), a state of said further electronic device (11,51,71), a color of said further electronic device (11,51,71) and/or a shape of said further electronic device (11,51,71).

3. A luminous panel system (1,21,41,61) as claimed in claim 2, wherein said controller (5) is further configured to:
- determine, based on said position and/or said dimensions and/or said orientation of said further electronic device (11,51,71), a plurality of pixels covered by said further electronic device (11,51,71) when said further electronic device (11,51,71) is attached to said light emitting surface (3,43,63,103), and
- reduce said plurality of pixels' light output level while said further electronic device (11,51,71) is attached to said light emitting surface (3,43,63,103).

4. A luminous panel system (1,21,41,61) as claimed in any one of the preceding claims, wherein said controller (5) is configured to receive said one or more properties from sensing means integrated into said luminous panel system (1,21,41,61), from external sensing means, from said further electronic device (11,51,71) and/or from a user device.

5. A luminous panel system (1,21,41,61) as claimed in any one of the preceding claims, wherein said light emitting surface (3,43,63,103) is at least as large as a surface of said power supply means (9,29,39,47,67), said surface of said power supply means (9,29,39,47,67) facing said light emitting surface (3,43,63,103).

6. A luminous panel system (1,21,41,61) as claimed in claim 5, wherein said light emitting surface (3,43,63,103) is at least twice as large as said surface of said power supply means (9,29,39,47,67).

7. A luminous panel system (1,21,41,61) as claimed in any one of the preceding claims, wherein said light emitting surface (3,63) comprises a two-dimensional array of light emitting elements (31, 81).

8. A luminous panel system (1,21,41,61) as claimed in any one of the preceding claims, wherein said power supply means (9,29,39,47,67) are located on a symmetry axis (21,23) of said light emitting surface (3,43,63,103).

9. A luminous panel system (1,21) as claimed in any one of claims 1 to 8, wherein said power supply means (9,29,39) comprise one or more wireless power cells.

10. A luminous panel system (1,21) as claimed in claim 9, wherein said attachment means (7,27,37) comprise one or more magnetic or metal parts.

11. A luminous panel system (41,61) as claimed in any one of claims 1 to 8, wherein said power supply means (47,67) comprise a power track (47) and/or a power connector (67).

12. A luminous panel system (41,61) as claimed in claim 11, wherein said power track and/or said power connector (67) is covered by a light diffusing layer (85).

13. A luminous panel system (1,21,41,61) as claimed in any one of the preceding claims, wherein said power supply means (9,29,39,47,67) and said attachment means (7,27,37,45,65) are located behind said light emitting surface (3,43,63,103).

## Patentansprüche

1. Leuchtplattensystem (1, 21, 41, 61), das konfiguriert ist, um einen Bereich oder einen Benutzer zu beleuchten, das Leuchtplattensystem (1, 21, 41, 61) umfassend:
- eine Lichtaustrittsoberfläche (3, 43, 63, 103),
- eine Steuerung (5), die konfiguriert ist, um die Lichtaustrittsoberfläche (3, 43, 63, 103) zu steuern,
- Befestigungsmittel (7, 27, 37, 45, 65) zum Befestigen einer weiteren elektronischen Vorrichtung (11, 51, 71) an der Lichtaustrittsoberfläche (3, 43, 63, 103) und
- Stromversorgungsmittel (9, 29, 39, 47, 67) zum Versorgen der weiteren elektronischen Vorrichtung (11, 51, 71) mit Strom, wenn die weitere elektronische Vorrichtung (11, 51, 71) über die Befestigungsmittel (7, 27, 37, 45, 65) an der Lichtaustrittsoberfläche (3, 43, 63, 103) befestigt ist,
**dadurch gekennzeichnet, dass** die Stromversorgungsmittel (9, 29, 39, 47, 67) von einer Vielzahl von Teilen der Lichtaustrittsoberfläche (3, 43, 63, 103) auf gegenüberliegenden Seiten der Stromversorgungsmittel (9, 29, 39, 47, 67) umgeben sind,
wobei die Steuerung (5) konfiguriert ist, um die Lichtaustrittsoberfläche (3, 43, 63, 103) basierend auf einer oder mehreren Eigenschaften der weiteren elektronischen Vorrichtung (11, 51, 71) zu steuern,
wenn die weitere elektronische Vorrichtung (11, 51, 71) an der Lichtaustrittsoberfläche (3, 43, 63, 103) befestigt ist, wobei die eine oder die mehreren Eigenschaften der weiteren elektronischen Vorrichtung (11, 51, 71) eine Position und/oder eine Abmessung und/oder eine Ausrichtung der weiteren elektronischen Vorrichtung (11, 51, 71) umfassen,
wobei die Steuerung (5) konfiguriert ist zum:
- Bestimmen, basierend auf der Position und/oder den Abmessungen und/oder der Ausrichtung der weiteren elektronischen Vorrichtung (11, 51, 71), einer Vielzahl von Pixeln, die die weitere elektronische Vorrichtung (11, 51, 71) umgeben, wenn die weitere elektronische Vorrichtung (11, 51, 71) an der Lichtaustrittsoberfläche (3, 43, 63, 103) befestigt ist, und
- Steuern der umgebenden Pixel.

2. Leuchtplattensystem (1, 21, 41, 61) nach Anspruch 1, wobei die eine oder die mehreren Eigenschaften ferner einen Typ der weiteren elektronischen Vorrichtung (11, 51, 71), eine Kennung einer auf der weiteren elektronischen Vorrichtung (11, 51, 71) laufenden App, auf der weiteren elektronischen Vorrichtung (11, 51, 71) wiedergegebene Inhalte, einen Zustand der weiteren elektronischen Vorrichtung (11, 51, 71), eine Farbe der weiteren elektronischen Vorrichtung (11, 51, 71) und/oder eine Form der weiteren elektronischen Vorrichtung (11, 51, 71) umfassen.

3. Leuchtplattensystem (1, 21, 41, 61) nach Anspruch 2, wobei die Steuerung (5) ferner konfiguriert ist zum:
- Bestimmen, basierend auf der Position und/oder den Abmessungen und/oder der Ausrichtung der weiteren elektronischen Vorrichtung (11, 51, 71), einer Vielzahl von Pixeln, die durch die weitere elektronische Vorrichtung (11, 51, 71) abgedeckt sind, wenn die weitere elektronische Vorrichtung (11, 51, 71) an der Lichtaustrittsoberfläche (3, 43, 63, 103) befestigt ist, und
- Reduzieren des Lichtleistungspegels der Vielzahl von Pixeln, während die weitere elektronische Vorrichtung (11, 51, 71) an der Lichtaustrittsoberfläche (3, 43, 63, 103) befestigt ist.

4. Leuchtplattensystem (1, 21, 41, 61) nach einem der vorstehenden Ansprüche, wobei die Steuerung (5) konfiguriert ist, um die eine oder die mehreren Eigenschaften von in das Leuchtplattensystem (1, 21, 41, 61) integrierten Sensormitteln, von externen Sensormitteln, von der weiteren elektronischen Vorrichtung (11, 51, 71) und/oder von einer Benutzervorrichtung zu empfangen.

5. Leuchtplattensystem (1, 2, 41, 61) nach einem der vorstehenden Ansprüche, wobei die Lichtaustrittsoberfläche (3, 43, 63, 103) mindestens so groß ist wie eine Oberfläche der Stromversorgungsmittel (9, 29, 39, 47, 67), wobei die Oberfläche der Stromversorgungsmittel (9, 29, 39, 47, 67) der Lichtaustrittsoberfläche (3, 43, 63, 103) zugewandt ist.

6. Leuchtplattensystem (1,21,41,61) nach Anspruch 5, wobei die Lichtaustrittsoberfläche (3, 43, 63, 103) mindestens doppelt so groß ist wie die Oberfläche der Stromversorgungsmittel (9, 29, 39, 47, 67).

7. Leuchtplattensystem (1, 21, 41, 61) nach einem der vorstehenden Ansprüche, wobei die Lichtaustrittsoberfläche (3, 63) eine zweidimensionale Anordnung von Lichtaustrittsoberflächenelementen (31, 81) umfasst.

8. Leuchtplattensystem (1, 21, 41, 61) nach einem der vorstehenden Ansprüche, wobei sich die Stromversorgungsmittel (9, 29, 39, 47, 67) auf einer Symmetrieachse (21, 23) der Lichtaustrittsoberfläche (3, 43, 63, 103) befinden.

9. Leuchtplattensystem (1, 21) nach einem der Ansprüche 1 bis 8, wobei die Stromversorgungsmittel (9, 29, 39) eine oder mehrere drahtlose Stromzellen umfassen.

10. Leuchtplattensystem (1, 21) nach Anspruch 9, wobei die Befestigungsmittel (7, 27, 37) ein oder mehrere magnetische oder metallische Teile umfassen.

11. Leuchtplattensystem (41, 61) nach einem der Ansprüche 1 bis 8, wobei die Stromversorgungsmittel (47, 67) eine Stromschiene (47) und/oder einen Stromanschluss (67) umfassen.

12. Leuchtplattensystem (41, 61) nach Anspruch 11, wobei die Stromschiene und/oder der Stromanschluss (67) durch eine Lichtstreuschicht (85) abgedeckt ist/sind.

13. Leuchtplattensystem (1, 21, 41, 61) nach einem der vorstehenden Ansprüche, wobei sich die Stromversorgungsmittel (9, 29, 39, 47, 67) und die Befestigungsmittel (7, 27, 37, 45, 65) hinter der Lichtaustrittsoberfläche (3, 43, 63, 103) befinden.

## Revendications

1. Système de panneau lumineux (1,21,41,61) configuré pour éclairer une zone ou un utilisateur, ledit système de panneau lumineux (1,21,41,61) comprenant :
- une surface émettrice de lumière (3,43,63,103),
- un dispositif de commande (5) configuré pour commander ladite surface émettrice de lumière (3,43,63,103),
- des moyens de fixation (7,27,37,45,65) permettant de fixer un autre dispositif électronique (11,51,71) à ladite surface émettrice de lumière (3,43,63,103), et
- des moyens d'alimentation électrique (9,29,39,47,67) permettant d'alimenter en électricité ledit autre dispositif électronique (11,51,71) lorsque ledit autre dispositif électronique (11,51,71) est fixé à ladite surface émettrice de lumière (3,43,63,103) par l'intermédiaire desdits moyens de fixation (7,27,37,45,65) ;
**caractérisé en ce que** lesdits moyens d'alimentation électrique (9,29,39,47,67) sont entourés d'une pluralité de parties de ladite surface émettrice de lumière (3,43,63,103) à des côtés opposés desdits moyens d'alimentation électrique (9,29,39,47,67),
dans lequel ledit dispositif de commande (5) est configuré pour commander ladite surface émettrice de lumière (3,43,63,103) sur la base d'une ou de plusieurs propriétés dudit autre dispositif électronique (11,51,71) lorsque ledit autre dispositif électronique (11,51,71) est fixé à ladite surface émettrice de lumière (3,43,63,103), dans lequel ladite ou lesdites propriétés dudit autre dispositif électronique (11,51,71) comprennent une position et/ou des dimensions et/ou une orientation dudit autre dispositif électronique (11,51,71),
dans lequel ledit dispositif de commande (5) est configuré pour :
- déterminer, sur la base de ladite position et/ou desdites dimensions et/ou de ladite orientation dudit autre dispositif électronique (11,51,71), une pluralité de pixels entourant ledit autre dispositif électronique (11,51,71) lorsque ledit autre dispositif électronique (11,51,71) est fixé à ladite surface émettrice de lumière (3,43,63,103), et
- commander lesdits pixels environnants.

2. Système de panneau lumineux (1,21,41,61) selon la revendication 1, dans lequel ladite ou lesdites propriétés comprennent en outre un type dudit autre dispositif électronique (11,51,71), un identifiant d'une application fonctionnant sur ledit autre dispositif électronique (11,51,71), un contenu rendu sur ledit autre dispositif électronique (11,51,71), un état dudit autre dispositif électronique (11,51,71), une couleur dudit autre dispositif électronique (11,51,71) et/ou une forme dudit autre dispositif électronique (11,51,71).

3. Système de panneaux lumineux (1,21,41,61) selon la revendication 2, dans lequel ledit dispositif de commande (5) est en outre configuré pour :
- déterminer, sur la base de ladite position et/ou desdites dimensions et/ou de ladite orientation dudit autre dispositif électronique (11,51,71), une pluralité de pixels couverts par ledit autre dispositif électronique (11,51,71) lorsque ledit autre dispositif électronique (11,51,71) est fixé à ladite surface émettrice de lumière (3,43,63,103), et
- réduire le niveau de sortie de lumière de ladite pluralité de pixels pendant que ledit autre dispositif électronique (11,51,71) est fixé à ladite surface émettrice de lumière (3,43,63,103).

4. Système de panneau lumineux (1,21,41,61) selon l'une quelconque des revendications précédentes, dans lequel ledit dispositif de commande (5) est configuré pour recevoir ladite ou lesdites propriétés à partir de moyens de détection intégrés dans ledit système de panneau lumineux (1,21,41,61), à partir de moyens de détection externes, à partir dudit autre dispositif électronique (11,51,71) et/ou à partir d'un dispositif utilisateur.

5. Système de panneaux lumineux (1,21,41,61) selon l'une quelconque des revendications précédentes, dans lequel ladite surface émettrice de lumière (3,43,63,103) est au moins aussi grande qu'une surface desdits moyens d'alimentation électrique (9,29,39,47,67), ladite surface desdits moyens d'alimentation électrique (9,29,39,47,67) faisant face à ladite surface émettrice de lumière (3,43,63,103).

6. Système de panneaux lumineux (1,21,41,61) selon la revendication 5, dans lequel ladite surface émettrice de lumière (3,43,63,103) est au moins deux fois plus grande que ladite surface desdits moyens d'alimentation électrique (9,29,39,47,67).

7. Système de panneau lumineux (1,21,41,61) selon l'une quelconque des revendications précédentes, dans lequel ladite surface émettrice de lumière (3,63) comprend un réseau bidimensionnel d'éléments émetteurs de lumière (31, 81).

8. Système de panneau lumineux (1,21,41,61) selon l'une quelconque des revendications précédentes, dans lequel lesdits moyens d'alimentation électrique (9,29,39,47,67) sont situés sur un axe de symétrie (21,23) de ladite surface émettrice de lumière (3,43,63,103).

9. Système de panneaux lumineux (1,21) selon l'une quelconque des revendications 1 à 8, dans lequel lesdits moyens d'alimentation électrique (9,29,39) comprennent une ou plusieurs cellules d'alimentation sans fil.

10. Système de panneaux lumineux (1,21) selon la revendication 9, dans lequel lesdits moyens de fixation (7,27,37) comprennent une ou plusieurs pièces magnétiques ou métalliques.

11. Système de panneaux lumineux (41,61) selon l'une quelconque des revendications 1 à 8, dans lequel lesdits moyens d'alimentation électrique (47,67) comprennent une piste d'alimentation (47) et/ou un connecteur d'alimentation (67).

12. Système de panneaux lumineux (41,61) selon la revendication 11, dans lequel ladite piste d'alimentation et/ou ledit connecteur d'alimentation (67) est recouvert d'une couche de diffusion de la lumière (85).

13. Système de panneau lumineux (1,21,41,61) selon l'une quelconque des revendications précédentes, dans lequel lesdits moyens d'alimentation électrique (9,29,39,47,67) et lesdits moyens de fixation (7,27,37,45,65) sont situés derrière ladite surface émettrice de lumière (3,43,63,103).
